Europäisches Patentamt

European Patent Office

Office européen des brevets

(11) Publication number: **0 399 290**
**A1**

# EUROPEAN PATENT APPLICATION

(21) Application number: **90108769.2**

(51) Int. Cl.⁵: **B60B 29/00, B25B 21/00**

(22) Date of filing: **10.05.90**

(30) Priority: **23.05.89 IT 3483989 U**

(43) Date of publication of application:
**28.11.90 Bulletin 90/48**

(84) Designated Contracting States:
**AT BE CH DE DK ES FR GB GR LI LU NL SE**

(71) Applicant: **DINO PAOLI & C. S.n.c.**
**Via G. Dorso 5**
**I-42100 Reggio Emilia(IT)**

(72) Inventor: **Paoli, Dino**
**via G. Dorso, 5**
**I-42100 Reggio Emilia(IT)**

(74) Representative: **Lecce, Giovanni**
**Dott. Giovanni Lecce & C. S.r.l. Via G. Negri**
**10**
**I-20123 Milano(IT)**

(54) **Screwing and unscrewing device and automatic screwer with adjustable torque.**

(57) An automatic screwing and unscrewing device of nuts and bolts for wheels of vehicles in general, comprising a hydraulic circuit, with adjustable maximum pressure valves (7) and cutoff valves (8), which feeds a hydraulic motor (10) to which is coupled, with the interposition of a rev reducer (11), a supporting horizontal spindle (12) for the interchangable connecting bushes of the heads of the bolts or nuts (18).

This machine, mounted on wheeled carriage (1), is easy to align with bolts or nuts (18) of the wheels (20) of vehicles, and its operation, which provides the regulation of the pressure of the operating oil, makes it possible to obtain a regulation of the screwing and/or unscrewing torque.

*Fig.3*

EP 0 399 290 A1

## SCREWING AND UNSCREWING DEVICE AND AUTOMATIC SCREWER WITH ADJUSTABLE TORQUE

The utility model refers to an automatic screwing and unscrewing device and automatic screwer with adjustable torque, particularly suitable for the assembly and dismantling of wheels of vehicles in general.

It consists of an adjustable motorized hydraulic pump which, through a hydraulic circuit comprising adjustable maximum pressure valves and cutoff valves, feeds a hydraulic motor to which leads, with the interposition of a speed reducer, a supporting spindle of the interchangeable bushes of connection to bolts and/or nuts.

The screwer is preferably mounted on carriage with wheels comprising the control panel, and the spindle is placed in horizontal position and comprises a vertical check arm.

The present screwing and unscrewing devices of bolts or nuts fixing the wheels of vehicles in general, and, in particular, of industrial and agricultural vehicles, are preferably constructed by means of pneumatic or electric propulsor systems with pulses, without torque control. While valid from the functional point of view, they present some particularities which make them unsuitable for certain uses, or, at any rate, they are not very suitable.

Said drawbacks consist in the fact that, beyond a certain limit of closing torque of the bolts or nuts, the screwing and/or unscrewing devices are very bulky, very heavy and too noisy.

Other drawbacks consist in the fact that the above devices are substantially usable with manual support or, at the maximum, with mechanical support with suspension and hand grip; these structures, during operation, besides being fundamentally awkward and tiring, are sources of high vibrations have a damaging effect on the users.

The object of the present industrial utility model is to eliminate the above drawbacks.

The invention, as characterized by the claims, solves the problem with an automatic screwing and unscrewing device with adjustable torque, with which the following results are obtained: the pressure of the oil driving the hydraulic motor is adjustable, with consequent adjustment of the starting torque, according to the type of nut or bolt on which work must be carried out; the torque transmission coupler, or the outlet spindle, is directly connected to the supporting structure of the carriage in which are comprised the regulation system, the oil circulation system and the motors; the spindle is of retractable type and comprises a check arm, of reaction against the rotating action of the wheels produced by the application of the screwing or unscrewing torques.

The advantages of the present invention mainly consist in the fact that the actions of screwing and/or unscrewing are carried out automatically, after the coupling of the bushes on the spindle and on the bolts or nuts, with only forward and backward movements of the spindle with machine at a standstill and without the direct intervention of the users on the actions, which, in said conditions, no longer exercise physical force, but only operative and control manoeuvres: the screwing and/or unscrewing of bolts of wheels is carried out in sequence, maintaining the device aligned and steady, making the spindle move backwards and forwards and making only the wheels rotate. raised from the ground for the following arrangements.

Another advantage consists in the fact that torque regulation, obtained by means of pressure regulation of the oil driving the hydraulic motor, permits a considerable power saving, as the electric motor moving the adjustable hydraulic pump needs moderate power.

Further advantages consist in the fact that the axial arrangement of the spindle permits a greater work precision, that the control of the applied torque is possible with constant, pre-established, multiple selections, and that the operating noise and vibrations emitted are substantially reduced to insignificant values.

The industrial utility model is described in more detail below, with reference to the attached illustrative, unbinding drawings, in which:

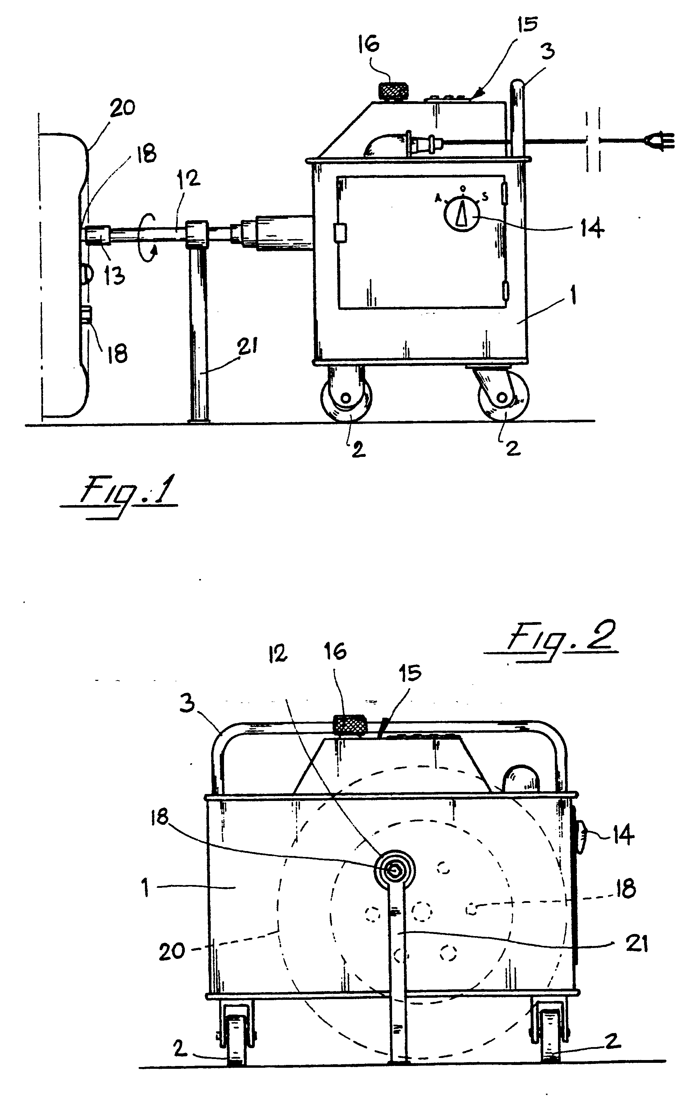

fig. 1 shows the overall lateral view of the complete device,

fig. 2 shows the overall front view of the same device, and

fig. 3 shows an illustrative, unbinding example of the hydraulic circuit of the device.

The figures illustrate an automatic screwing and unscrewing device with adjustable torque in which an external case (1), equipped with wheels (2) and large handle (3), comprise the supporting structure of a hydraulic gearbox formed by an oil tank (19), at least one adjustable pump (4) driven by an electric motor (5), and by a circuit (6) comprising at least one adjustable maximum pressure valve (7), one cutoff valve (8), one three-position, four-way solenoid valve (9), a hydraulic motor (10) and a reducer (11) to which is coupled a rotating spindle (12), on the end of which are applied some interchangeable bushes (13). The rotating spindle is preferably of retractable telescopic type, to guarantee its forward and/or backward movement at the end of each screwing or unscrewing, without having to move the initial position of the device. The telescopic system is simply composed of two tubular bodies or the like, sliding coaxially one into the other, with the interposition of a counterspring which keeps the spindle always in extension. The backward movement of the spindle (12) is produced by hand, while its forward movement is produced by the extension of said counterspring.

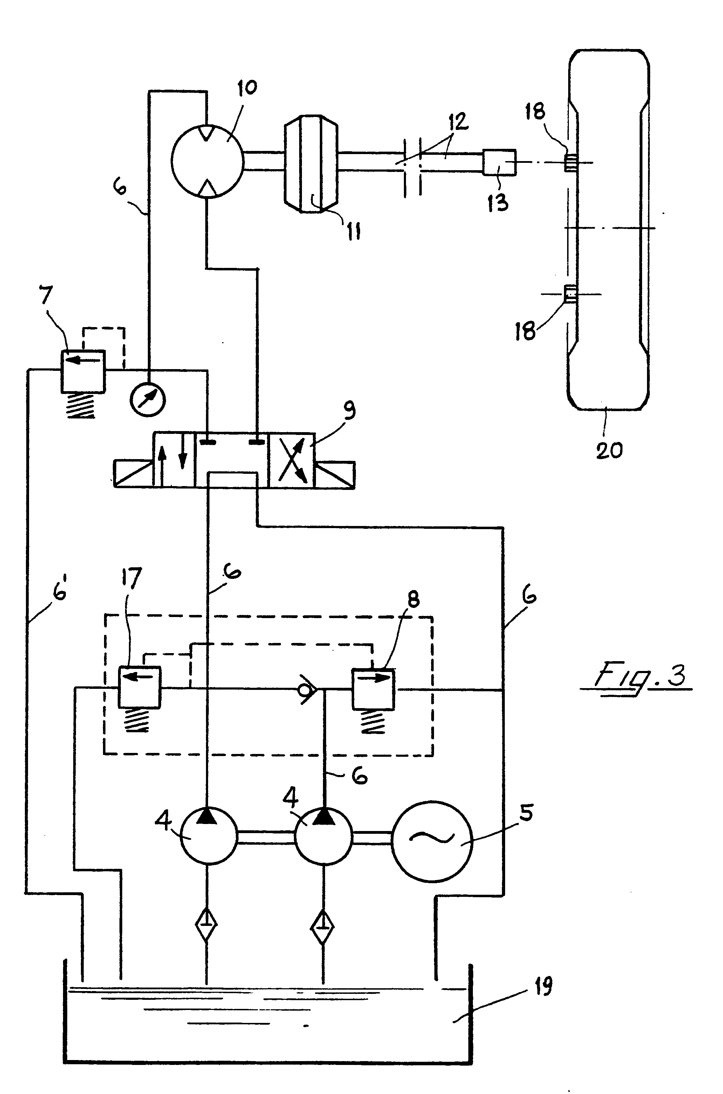

In the solution illustrated in figure 3, in place of an adjustable hydraulic pump, a double pump with gears (4) and (4') has been installed, whose characteristics, as will be seen later, substantially correspond. The two bodies (4) and (4') of the geared pump are preferably dimensioned for different flow rates, e.g. one equal to four to five times the other. By means of a push-button positioned on the control panel (15), the electric motor (5) is started which starts up the pumps (4) and (4'). Acting on the knob (16), the required tightening torque is preselected, regulating the pressure of the oil reaching the hydraulic motor (10).

The knob (16) intervenes directly on the maximum valve (7) regulating the pressure continuously and permitting any torque selection comprised in the field of use.

In these conditions, the spindle (12) mounting the bush (13) corresponding to the bolt or nut (18) to be screwed or unscrewed is capable of exercising its rotating action, moved by the hydraulic motor (10). Between the spindle (12) and motor (10) is preferably interposed a geared reducer of epicyclic type (11).

For the use, the device is placed alongside the wheels (20), suitable raised from the ground.

In substance, the wheels of the vehicles on which the interventions must be made must be previously raised from the ground by means of traditional lifting jacks, or any other suitable means, after which the device object of the present invention is placed alongside the wheels (20), so that the spindle (12) is aligned to one of the bolts or nuts (18).

The corresponding interchangeable bush (13) is mounted on the spindle (12) then this spindle is pushed, with the device, forward until said bush is coupled with said bolt or nut.

By means of the selector (14) the rotating direction of the hydraulic motor (10) is preset, to carry out screwing or unscrewing.

The selector (14) intervenes on the solenoid valve (9), switching its idle position into active position which communicates the cycle (6) of the pumps with that of the motor (10) to produce a preestablished rotating direction on the latter. For example, moving the box of the solenoid valve (9) to the right, as shown in figure 3, the connection of the oil circuit is obtained, useful for the rotation of the motor (10) which generates the screwing direction of the bolts or nuts (18).

At the limit stop of switching, the tightening torque is that prechosen, selected with the knob (16), as the excess flow of the pumps (4) and (4') is drained to the tank through the valve (7) and the duct (6'), without working in the motor (10).

In an alternative solution, the torque selection may be displayed on the control panel by means of a digital display. For the unscrewing operation it is sufficient to reverse the position of the selector (14), which causes the movement all to the left with respect to figure 3, of the solenoid valve (9); in this way the feed and drain ducts of the motor (10) are reversed, with similar reversal of its rotating direction. In the case of unscrewing, the torque is given by the maxi-pressure setting of the plant, controlled by the maximum valve (7), suitably plumbed. This solution is preferred as there is the certainty of screwing even in possible cases of old bolts or nuts, possibly rusted or encrusted.

The hydraulic system used for the present invention, while unbinding but only illustrative, has been designed to exploit the maximum power of the electric motor (5), however very low with values of 3 HP, with high torque and high number of revs. This is possible, in fact, using adjustable hydraulic pumps, or, as in the example described and illustrated, using coupled geared pumps (4) and (4'), with different flow rates, connected to a high-low pressure valve (8). With the sum of the two deliveries of the pumps we obtain the maximum number of revs with low torque. On reaching a prefixed setting of the cutoff valve (8) the pump with higher flow is connected to the drain by the pressure of the pump with lower flow, thus obtaining a high torque at low speed, in both screwing and unscrewing.

As mentioned, the rotating spindle (12) is aligned to one of the bolts or nuts (18) of the wheels (20). At the end of the operation, the spindle (12) is moved slightly back, leaving the device in position, and the wheel (20) is rotated sufficiently to align to the same spindle (12) a successive bult or nut (18), after which the spindle (12) is made re-advance.

The above phases are repeated for all the bolts or nuts (18) to be treated of each wheel, regardless of their diameter, of the positioning diameter of the bolts or nuts and of the lifting from ground.

This means that it is possible and easy to determine a point of alignment of the bolts or nuts, regardless of the wheel on which they are or must be mounted, with the spindle (12).

This solution facilitates all interventions on the wheels enormously and permits the construction of the device with the spindle positioned horizontally at a fixed height from the ground.

To avoid that, during the screwing and/or unscrewing, the torque applied on the bolts or nuts (18) by the rotating spindle (12) causes a rotating movement on the wheels (20), a vertical check arm (21) is mounted on the same spindle, which, leaning on the ground, prevents any deflections and/or undesired movements.

To coordinate the checking reaction of the vertical arm (21), in contrast with the direction of the rotational tendency of the wheels (20) under the effect of the torque applied to the rotating spindle (12), the screwing or unscrewing of the bolts or nuts (18) must take place to the left or right of the right or left direction of screwing or unscrewing of the bolts or nuts (18).

At any rate, the device, in its constructive and creative simplicity is easy to use and permits considerable power savings compared with the instruments at present in use.

## Claims

1) Automatic screwing and unscrewing device with adjustable torque, characterized by the fact of comprising a motorized, telescopic, horizontal spindle (12), mounted on a movable carriage (1), applicable to wheels of vehicles, in which are comprised torque moving and regulating means, of hydraulic type

2) Device according to claim 1, characterized by the fact that the motorized horizontal spindle (12) is equipped with a vertical check arm (21), of contrast to the rotating movement of reaction of the wheels (20) originated by the screwing and/or unscrewing torques applied on the bolts or nuts (18).

3) Device according to claims 1 and 2, characterized by the fact that the rotating spindle (12) supporting interchangeable bushes (13) is coupled, by an epicyclic reducer (11 to a hydraulic motor (10) fed by an adjustable pump (4) driven by an electric motor (5).

4) Device according to claims 1 to 3, characterized by the fact that the oil circuit (6) between the adjustable pump (4) and the hydraulic motor (10) comprises a three-position, four-way solenoid valve (9), at least one adjustable maximum pressure valve (7), a cutoff valve (8) and a plumbed maximum pressure valve (17).

5) Device according to claims 1 to 4, characterized by the fact that the adjustable pump (4) consists of a geared pump two bodies (4) and (4') with different flow rates.

6) Device according to claims 1 to 5, characterized by the fact of comprising a control panel (15) with starting and control buttons and with a knob (16) of continuous regulation of the torque, directly connected with the pressure regulating valve (7).

7) Device according to claims 1 to 6, characterized by the fact of comprising an external selector (14) acting on the three-position, four-way solenoid valve, reversing flow to the hydraulic motor (10).

8) Device according to claims 1 to 7, characterized by the fact that the spindle (12) is telescopic, formed by two tubular bodies, or the like, coaxial, one sliding into the other, with the interposition of a counterspring which keeps them extended.

9) Automatic screwing and unscrewing device with adjustable torque according to the previous claims, as illustrated and described, and for the object specified.

*Fig.1*

*Fig.2*

_Fig.3_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-2064394 (LA ROSA) <br> * page 1, line 120 - page 2, line 130; figures 1-6 * | 1, 5, 6, 7 | B60B29/00 <br> B25B21/00 |
| Y | US-A-3491427 (ZIMMERMANN) <br> * column 2, lines 41 - 61 * <br> * column 3, line 22 - column 4, line 7; figures 1-5 * | 1, 5, 6, 7 | |
| A | GB-A-1476441 (FRANZ PLASSER BAUMASCHINEN) <br> * page 3, line 1 - page 4, line 3; figures 1, 2 * | 1, 5 | |
| A | US-A-Re25602 (LYONS) <br> * column 4, line 33 - column 5, line 16; figures 4, 7 * | 1, 8 | |

| | TECHNICAL FIELDS SEARCHED (Int. Cl.5) |
|---|---|
| | B60B <br> B25B |

The present search report has been drawn up for all claims

| Place of search | Date of completion of the search | Examiner |
|---|---|---|
| THE HAGUE | 29 AUGUST 1990 | AYITER I. |